# FASCICULE DE BREVET EUROPEEN

(11) **EP 4 476 779 B1**
(45) Date de publication et mention de la délivrance du brevet: **07.05.2025**
(21) Numéro de dépôt: 24725257.0
(22) Date de dépôt: 24.04.2024
(51) Int. Cl.: H01M 4/04, H01M 10/04, H01M 10/0583

(54) **PROCÉDÉ ET UNITÉ DE FABRICATION D'UNE CELLULE POUR BATTERIE ÉLECTRIQUE**
VERFAHREN UND EINHEIT ZUR HERSTELLUNG EINER ZELLE FÜR EINE ELEKTRISCHE BATTERIE
METHOD AND UNIT FOR MANUFACTURING A CELL FOR AN ELECTRIC BATTERY

(30) Priorité: 24.04.2023 FR 2304108
(43) Date de publication de la demande: 18.12.2024
(73) Titulaire: Verkor, 38000 Grenoble (FR)
(72) Inventeur: KIM, Jeong Hyun, 38000 Grenoble (FR); SHIN, Hyuk, 38000 Grenoble (FR); JEONG, Hyeok, 38000 Grenoble (FR); BAE, Yunju, 38000 Grenoble (FR)
(74) Mandataire: Novagraaf Group
(86) Numéro de dépôt international: PCT/IB2024/054007
(87) Numéro de publication internationale: WO 2024/224315

(56) Documents cités:
- JP-A- 2020 189 737
- JP-A- 2022 018 028
- KR-B1- 101 020 186
- US-A1- 2010 132 308

## Description

### Domaine technique de l'invention

L'invention concerne le domaine des batteries électriques rechargeables pour véhicule automobile électrique. En particulier l'invention concerne la fabrication de cellules électriques destinées à équiper des batteries électriques. De façon plus précise, l'invention concerne un procédé et une unité de fabrication de cellules électrochimiques lithium-ion du type « pouch », c'est-à-dire des cellules en sachet.

### Arrière-plan technique

Les cellules électriques, dites du type « pouch », c'est-à-dire des cellules en sachets, destinées à équiper des batteries électriques rechargeables peuvent être fabriquées de différentes façons.

Une manière de fabriquer ces cellules consiste à découper puis à déposer des électrodes de polarité opposée les unes sur les autres en les séparant par un film séparateur isolant.

Le film séparateur est déroulé au fur et à mesure que les électrodes sont déposées sur ledit film séparateur. Ainsi le film séparateur est d'abord déroulé. Une première électrode est déposée. Le film séparateur est à nouveau déroulé pour recouvrir la première électrode. Une deuxième électrode de polarité opposée à la première électrode est déposée sur le film séparateur. Le film séparateur est alors déroulé à nouveau pour recouvrir la deuxième électrode. Ces opérations sont réitérées plusieurs fois en fonction des besoins en termes de capacité et de puissance.

Après l'opération de dépose d'une électrode et avant de dérouler le film séparateur pour recouvrir ladite électrode déposée, le procédé comprend généralement une opération de maintien de l'électrode avec des éléments de maintien. Au moins deux éléments de maintien plaquent l'électrode contre le film séparateur puis le film séparateur est déroulé sur l'électrode ainsi plaquée pour la recouvrir. Une fois le film séparateur déroulé, les éléments de maintien sont retirés pour plaquer d'autres électrodes.

Les éléments de maintien viennent plaquer les électrodes aux extrémités latérales afin de s'assurer que le séparateur tendu mécaniquement, n'endommage ni n'emporte l'électrode lors du déroulement, étant donné que l'électrode est fine et déformable.

Bien qu'il donne en partie satisfaction, ce procédé de fabrication demeure perfectible. Le film séparateur qui est tendu mécaniquement, est au contact des éléments de maintien car ledit film séparateur est replié autour des éléments de maintien. Il arrive, lors du retrait des éléments de maintien, que ceux-ci endommagent le film séparateur par friction. Le film séparateur est alors égratigné, voire déchiré.

Un film séparateur endommagé peut être l'origine d'accidents gravissimes tel un incendie ou une explosion lorsque le défaut n'est pas détecté suffisamment tôt.

L'invention vise à résoudre cet inconvénient.

### Résumé de l'invention

A cet effet, il est proposé en premier lieu un procédé de fabrication d'une cellule pour batterie secondaire comprenant :
- une première opération de déroulement d'un film séparateur,
- une deuxième opération de dépose sur le film séparateur d'une première électrode,
- une troisième opération de maintien sur le film séparateur d'un premier bord latéral et d'un premier bord longitudinal de la première électrode au moyen d'un premier élément de maintien et d'un deuxième bord latéral opposé au premier bord latéral et du premier bord longitudinal de la première électrode, au moyen d'un deuxième élément de maintien,
- une quatrième opération de déroulement du film séparateur pour recouvrir la première électrode,
- une cinquième opération de dépose sur le film séparateur d'une deuxième électrode de polarité opposée à la première électrode, la deuxième électrode étant agencée sensiblement en regard de la première électrode,
- une sixième opération de maintien sur le film séparateur d'un troisième bord latéral et d'un troisième bord longitudinal de la deuxième électrode au moyen d'un troisième élément de maintien et d'un quatrième bord latéral et du troisième bord longitudinal de la deuxième électrode, au moyen d'un quatrième élément de maintien,
- une septième opération de déroulement du film séparateur pour recouvrir la deuxième électrode,
- une huitième opération de retrait du premier élément de maintien et du deuxième élément de maintien,
- une neuvième opération de retrait du troisième élément de maintien et du quatrième élément de maintien,
   procédé dans lequel les opérations peuvent être répétées une pluralité de fois, procédé dans lequel la huitième opération de retrait comprend successivement un premier mouvement latéral dans lequel le premier élément de maintien et le deuxième élément de maintien effectuent un mouvement selon un premier axe parallèle aux premier et deuxième bords latéraux et un premier mouvement d'éloignement dans lequel les premier et deuxième éléments de maintien s'éloignent de la première électrode
      ou,
   ladite huitième opération de retrait comprend simultanément un premier mouvement latéral dans lequel le premier élément de maintien et le deuxième élément de maintien effectuent un mouvement selon un premier axe parallèle aux premier et deuxième bords latéraux et un premier mouvement d'éloignement dans lequel les premier et deuxième éléments de maintien s'éloignent de la première électrode.

La huitième opération de retrait qui comprend un premier mouvement latéral selon le premier axe permet avantageusement de ne pas endommager le film séparateur. En effet, le premier élément de maintien et le deuxième élément de maintien sont étroitement serrés par le film séparateur à l'issu de la quatrième opération. Grâce au premier mouvement latéral selon le premier axe, les premier et deuxième éléments de maintien peuvent se dégager du film séparateur sans l'endommager.

Diverses caractéristiques supplémentaires peuvent être prévues seules ou en combinaison :
- le premier mouvement d'éloignement est réalisé selon un deuxième axe perpendiculaire au premier axe, ledit deuxième axe étant parallèle à des premier et deuxième bords longitudinaux de la première électrode, lesdits bords longitudinaux étant sensiblement perpendiculaire aux premier et deuxième bords latéraux ;
- le premier élément de maintien et le deuxième élément de maintien viennent respectivement au contact de la première électrode et du film séparateur de sorte qu'une portion desdits premier et deuxième élément soit en contact avec la première électrode et qu'une autre portion des premier et deuxième éléments de maintien soit au contact du film séparateur situé en dessous de la première électrode, procédé dans lequel le film séparateur est replié autour des premier et deuxième éléments de maintien en définissant une première ligne de pliage qui s'étend selon le deuxième axe ;
- au cours du premier mouvement latéral, le premier élément de maintien et le deuxième élément de maintien se déplacent selon le premier axe depuis la première ligne de pliage vers le deuxième bord longitudinal ;
- la neuvième opération de retrait comprend successivement un deuxième mouvement latéral dans lequel le troisième élément de maintien et le quatrième élément de maintien se déplacent selon le premier axe et un deuxième mouvement d'éloignement dans lequel le troisième et le quatrième élément de maintien s'éloignent de la deuxième électrode
   ou,
   ladite neuvième opération de retrait comprend simultanément un deuxième mouvement latéral dans lequel le troisième élément de maintien et le quatrième élément de maintien se déplacent selon le premier axe et un deuxième mouvement d'éloignement
   dans lequel le troisième et le quatrième élément de maintien s'éloignent de la deuxième électrode ;
- le deuxième mouvement d'éloignement est réalisé selon un deuxième axe perpendiculaire au premier axe, ledit deuxième axe étant parallèle à des troisième et quatrième bords longitudinaux de la deuxième électrode, lesdits troisième et quatrième bords longitudinaux étant sensiblement perpendiculaires aux troisième et quatrième bords latéraux ;
- le troisième élément de maintien et le quatrième élément de maintien viennent respectivement au contact du troisième bord latéral et quatrième bord latéral de sorte qu'une portion des troisième et quatrième éléments de maintien soit en contact de la deuxième électrode et qu'une autre portion des troisième et quatrième éléments de maintien soit au contact du film séparateur situé en dessous de la deuxième électrode, procédé dans lequel le film séparateur est replié autour des troisième et quatrième éléments de maintien en définissant une deuxième ligne de pliage qui s'étend selon le deuxième axe ;
- au cours du deuxième mouvement latéral, le troisième élément de maintien et le quatrième élément de maintien se déplacent selon le premier axe depuis la deuxième ligne de pliage vers le quatrième bord longitudinal ;
- l'opération de déroulement et l'opération de dépose de la première électrode sont réalisées simultanément :
- le procédé comprend une opération initiale de déroulement du film séparateur, antérieure à l'opération de déroulement et à l'opération de dépose de la première électrode ;
- l'opération initiale est effectuée une seule fois au cours de l'assemblage des électrodes pour former la cellule.

Il est proposé en deuxième lieu une unité de fabrication comprenant :
- des moyens aptes à dérouler un film séparateur,
- des moyens aptes à déposer des électrodes sur le film séparateur,
- un premier élément de maintien, un deuxième élément de maintien, un troisième élément de maintien et un quatrième élément de maintien,
- une unité de commande comprenant un programme informatique apte à mettre en œuvre le procédé précédemment décrit.

Diverses caractéristiques supplémentaires peuvent être prévues seules ou en combinaison :
- l'unité de fabrication comprend un chariot mobile sur lequel est monté le premier élément de maintien et le deuxième élément de maintien de la première électrode, lesdits éléments de maintien étant des moyens de préhension aptes à saisir le film séparateur et une première électrode simultanément ;
- le troisième élément de maintien et le quatrième élément de maintien sont distincts des moyens aptes à dérouler le film séparateur et des moyens aptes à déposer la deuxième électrode.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la [Fig.1] est une représentation schématique d'un premier étage d'une cellule pour batterie secondaire.
[Fig.2] la [Fig.2] est une représentation schématique d'un deuxième étage de la cellule pour batterie secondaire de la [Fig.1].
[Fig.3] la [Fig.3] est une représentation schématique d'un procédé selon l'invention.
[Fig.4] la [Fig.4] est une représentation schématique d'un procédé selon un mode de réalisation de l'invention.

### Description détaillée de l'invention

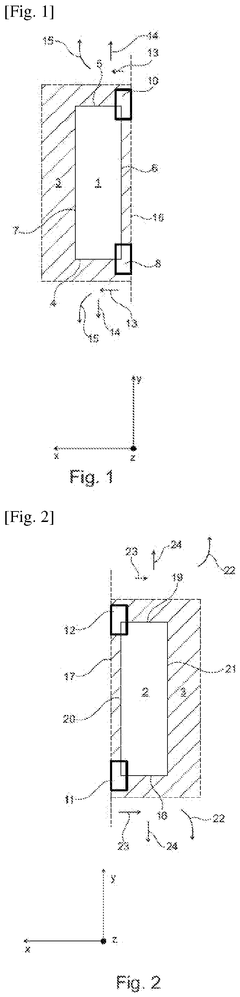

Sur les figures 1 et 2 sont respectivement représentées une première électrode 1 et une deuxième électrode 2 de polarité opposée à la première électrode 1, plaquées contre un film 3 séparateur.

Dans la suite de la description, on adoptera de manière non limitative - et sans référence à la gravité terrestre - des orientations longitudinale, transversale et verticale, indiquées par le trièdre X, Y, Z des figures et dans lesquels :
- un premier axe X correspond à un premier axe orienté transversalement par rapport aux électrodes 1, 2,
- un deuxième axe Y, perpendiculaire à l'axe X, correspond à un deuxième axe orienté longitudinalement par rapport aux électrodes 1, 2,
- un troisième axe Z, perpendiculaire à l'axe X et à l'axe Y.
Le trièdre XYZ définit les plans XY, XZ et YZ.

Dans ce qui suit, il sera décrit un procédé 25 de fabrication d'une cellule pour batterie secondaire, c'est-à-dire, rechargeable.

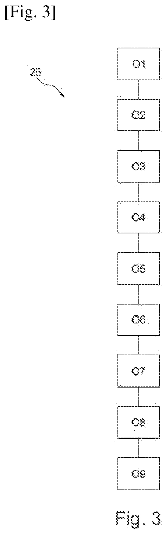

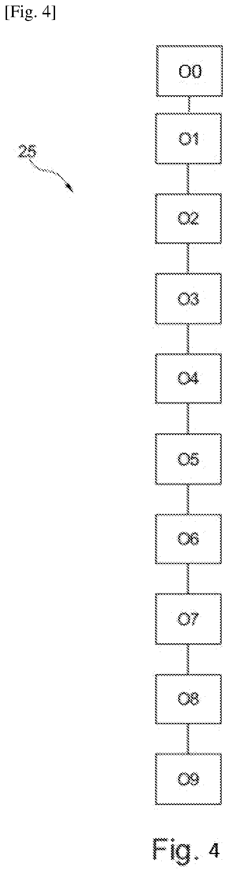

En référence aux figures 3 et 4 où les étapes analogues portent les mêmes références, le procédé 25 comprend une première opération O1 de déroulement d'un film 3 séparateur. Cette première opération O1 est réalisée au moyen d'un dispositif de déroulement (non représenté sur les dessins). Le film 3 séparateur est initialement enroulé en bobine et le dispositif de déroulement le déroule au fur et à mesure que les électrodes 1, 2 sont empilées les unes sur les autres. Le dispositif de déroulement se présente sous la forme d'un chariot effectuant un mouvement de va et vient selon le premier axe X.

Le procédé 25 comprend une deuxième opération O2 de dépose sur le film 3 séparateur de la première électrode 1. Sur le dessin de la [Fig.1], la première électrode 1 présente une forme sensiblement rectangulaire, non limitative.

La première électrode 1 comprend :
- un premier bord 4 latéral parallèle au premier axe X,
- un deuxième bord 5 latéral de même longueur que le premier bord 4 latéral et opposé au premier bord 4 latéral et parallèle au premier axe X,
- un premier bord 6 longitudinal parallèle au deuxième axe Y et plus long que le premier bord 4 latéral et le deuxième bord 5 latéral, et
- un deuxième bord 7 longitudinal de même longueur que le premier bord 6 longitudinal et opposé au premier bord 6 longitudinal et parallèle au deuxième axe Y.

Le procédé 25 comprend, une troisième opération O3 de maintien sur le film 3 séparateur, d'une part du premier bord 4 latéral et du premier bord 6 longitudinal et, d'autre part du deuxième bord 5 latéral et du premier bord 6 longitudinal de la première électrode 1. La troisième opération O3 de maintien est réalisée au moyen d'un premier élément 8 de maintien et d'un deuxième élément 10 de maintien.

Le procédé 25 comprend une quatrième opération O4 de déroulement du film 3 séparateur. Au cours de la quatrième opération O4, le film 3 séparateur est déroulé pour recouvrir la première électrode 1.

Le procédé 25 comprend une cinquième opération O5 de dépose sur le film 3 séparateur de la deuxième électrode 2. La deuxième électrode 2 est agencée sensiblement en regard de la première électrode 1.

La deuxième électrode 2 comprend :
- un troisième bord 18 latéral parallèle au premier axe X,
- un quatrième bord 19 latéral de même longueur que le troisième bord 18 latéral et opposé au troisième bord 18 latéral et parallèle au premier axe X,
- un troisième bord 20 longitudinal parallèle au deuxième axe Y et plus long que le troisième bord 18 latéral et le quatrième bord 19 latéral, et
- un quatrième bord 21 longitudinal de même longueur que le premier bord 6 longitudinal et opposé au troisième bord 20 longitudinal et parallèle au deuxième axe Y.

Le procédé 25 comprend, une sixième opération O6 de maintien sur le film 3 séparateur, d'une part du troisième bord 18 latéral et du troisième bord 20 longitudinal et, d'autre part du quatrième bord 19 latéral et du troisième bord 20 longitudinal de la deuxième électrode 2. La sixième opération O6 de maintien est réalisée au moyen d'un troisième élément 11 de maintien et d'un quatrième élément 12 de maintien.

Le procédé 25 comprend une septième opération O7 de déroulement du film 3 séparateur pour recouvrir la deuxième électrode 2.

Le procédé 25 comprend une huitième opération O8 de retrait du premier élément 8 de maintien et du deuxième élément 10 de maintien.

Le procédé 25 comprend une neuvième opération O9 de retrait du troisième élément 11 de maintien et du quatrième élément 12 de maintien.

Les première, deuxième, troisième, quatrième, cinquième, sixième, septième, huitième et neuvième opérations O1 - O9 sont répétées plusieurs fois. Ainsi il devient possible d'obtenir un empilement d'électrodes 1, 2 séparées par un film 3 séparateur. Il convient de noter que les opérations ne sont pas nécessairement réalisées dans l'ordre établi ci-dessus. En effet, des adaptations techniques du procédé 25 susmentionné sont susceptibles de modifier l'ordre des opérations sans que cela n'exerce une quelconque influence sur l'invention.

La huitième opération O8 de retrait comprend successivement un premier
mouvement 13 latéral et un premier mouvement 14 d'éloignement.

Au cours du premier mouvement 13 latéral, le premier élément 8 de maintien et le deuxième élément 10 de maintien effectuent, tous deux, un mouvement selon le premier axe X. Au cours du premier mouvement 14 d'éloignement, le premier élément 8 de maintien et le deuxième élément 10 de maintien s'éloignent de la première électrode 1 en se déplaçant selon le deuxième axe Y.

En alternative, la huitième opération O8 de retrait comprend simultanément un premier mouvement 13 latéral et un premier mouvement 14 d'éloignement.

Au cours du premier mouvement 13 latéral, le premier élément 8 de maintien et le deuxième élément 10 de maintien effectuent, tous deux, un mouvement selon le premier axe X. Au cours du premier mouvement 14 d'éloignement, le premier élément 8 de maintien et le deuxième élément 10 de maintien s'éloignent de la première électrode 1 en se déplaçant selon le deuxième axe Y. Dans cette alternative, le premier élément 8 de maintien et le deuxième élément 10 de maintien effectuent chacun un premier mouvement 15 incurvé.

La huitième opération O8 de retrait qui comprend un premier mouvement 13 latéral selon l'axe X permet avantageusement de ne pas endommager le film 3 séparateur. En effet, le premier élément 8 de maintien et le deuxième élément 10 de maintien sont étroitement serrés par le film 3 séparateur à l'issu de la quatrième opération O4. Grâce au premier mouvement 13 latéral selon l'axe X, les premier et deuxième éléments 8, 10 de maintien peuvent se dégager du film 3 séparateur sans l'endommager.

Avantageusement, le premier mouvement 14 d'éloignement est réalisé selon le deuxième axe Y. Un tel mouvement d'éloignement permet de rapidement dégager les premier et deuxième éléments 8, 10 de maintien afin d'augmenter les cadences de production.

Comme on peut l'observer sur la [Fig.1], le premier élément 8 de maintien est à la fois en contact intime de la première électrode 1 et du film 3 séparateur. Ainsi une portion du premier élément 8 de maintien se situe sur la première électrode 1 tandis qu'une autre portion du premier élément 8 de maintien se situe sur le film 3 séparateur. Le film 3 séparateur est replié autour des premier et deuxième éléments 8, 10 de maintien en définissant une première ligne 16 de pliage qui s'étend selon le deuxième axe Y.

Le premier élément 8 de maintien et le deuxième élément 10 de maintien permettent ensemble d'éviter que la première électrode 1 ne soit endommagée par le film 3 séparateur tendu.

Avantageusement, au cours du premier mouvement 13 latéral, le premier élément 8 de maintien et le deuxième élément 10 de maintien se déplacent selon le premier axe X depuis la première ligne 16 de pliage vers le côté opposé, c'est-à-dire en s'éloignant de la première ligne 16 de pliage en direction du deuxième bord 7 longitudinal ne faisant pas face à ladite première ligne 16 de pliage.

Ceci permet avantageusement aux premier et deuxième éléments 8, 10 de maintien de s'extraire de la zone étroite tendue située à proximité de la première ligne 16 de pliage avant d'amorcer un retrait définitif. Ainsi le risque d'endommager le film 3 séparateur au voisinage de la première ligne 16 de pliage est significativement réduit.

Avantageusement, la neuvième opération O9 de retrait comprend successivement un deuxième mouvement 23 latéral selon le premier axe X dans lequel le troisième élément 11 de maintien et le quatrième élément 12 de maintien se déplacent selon le premier axe X et un deuxième mouvement 24 d'éloignement dans lequel le troisième élément 11 de maintien et le quatrième élément 12 de maintien s'éloignent de la deuxième électrode 2.

En alternative, la neuvième opération O9 de retrait comprend simultanément un deuxième mouvement 23 latéral selon le premier axe dans lequel le troisième élément 11 de maintien et le quatrième élément 12 de maintien se déplacent selon le premier axe X et un deuxième mouvement 24 d'éloignement dans lequel le troisième élément 11 de maintien et le quatrième élément 12 de maintien s'éloignent de la deuxième électrode 2. Dans cette alternative, le troisième élément 11 de maintien et le quatrième élément 12 de maintien effectuent chacun un deuxième mouvement 22 incurvé.

La neuvième opération O9 de retrait qui comprend un deuxième mouvement 23 latéral selon l'axe X permet avantageusement de ne pas endommager le film 3 séparateur. En effet, le troisième élément 11 de maintien et le quatrième élément 12 de maintien sont étroitement serrés par le film 3 séparateur à l'issu de la sixième opération O6. Grâce au deuxième mouvement 23 latéral selon l'axe X, les troisième et quatrième éléments 11, 12 de maintien peuvent se dégager du film 3 séparateur sans l'endommager.

Avantageusement, le deuxième mouvement 24 d'éloignement est réalisé selon le deuxième axe Y. Un tel mouvement d'éloignement permet de rapidement dégager les troisième et quatrième éléments 11, 12 de maintien afin d'augmenter les cadences de production.

Comme on peut l'observer sur la [Fig.2], le troisième élément 11 de maintien est à la fois en contact intime de la deuxième électrode 2 et du film 3 séparateur. Ainsi une portion du troisième élément 11 de maintien se situe sur la deuxième électrode 2 tandis qu'une autre portion du troisième élément 11 de maintien se situe sur le film 3 séparateur. Le film 3 séparateur est replié autour des premier et deuxième éléments 11, 12 de maintien en définissant une deuxième ligne 17 de pliage qui s'étend selon le deuxième axe Y.

Le troisième élément 11 de maintien et le quatrième élément 12 de maintien permettent ensemble d'éviter que la deuxième électrode 2 ne soit endommagée par le film 3 séparateur tendu.

Avantageusement, au cours du deuxième mouvement 23 latéral, le troisième élément 11 de maintien et le quatrième élément 12 de maintien se déplacent selon le premier axe X depuis la deuxième ligne 17 de pliage vers le côté opposé, c'est-à-dire en s'éloignant de la deuxième ligne 17 de pliage en direction du quatrième bord 21 longitudinal ne faisant pas face à ladite deuxième ligne 17 de pliage.

Ceci permet avantageusement aux troisième et quatrième éléments 11, 12 de maintien de s'extraire de la zone étroite tendue située à proximité de la deuxième ligne 17 de pliage avant d'amorcer un retrait définitif. Ainsi le risque d'endommager le film 3 séparateur au voisinage de la deuxième ligne 17 de pliage est significativement réduit.

Avantageusement, dans un mode de réalisation, l'opération O1 de déroulement et l'opération O2 de dépose de la première électrode sont réalisées simultanément. En d'autres termes, le chariot précédemment évoqué permet à la fois de dérouler le séparateur et de déposer la première électrode.

Ainsi, avantageusement le chariot comprend par exemple des moyens de préhension du séparateur lesquels permettent de saisir le séparateur et la première électrode. Ainsi lors du déplacement du chariot, le séparateur est déroulé et la première électrode est déplacée puis déposée.

Avantageusement, le procédé 25 comprend, dans un mode de réalisation illustré par la [Fig.4], une opération O0 initiale de déroulement du film 3 séparateur. L'opération O0 initiale est antérieure aux opérations O1, O2.

Avantageusement, l'opération O0 initiale est effectuée une seule fois au cours de l'assemblage des électrodes pour former une cellule.

Cette opération O0 initiale permet de dérouler le film séparateur sans première électrode sur une table d'empilage. Ainsi au cours des opérations O1 et O2, la première électrode est déposée sur le film séparateur déroulé au cours de l'opération initiale O0.

La première électrode est par exemple convoyée avec le film 3 séparateur sur l'une des faces de ce dernier. Lorsque les moyens de préhension du chariot saisissent puis déplacent le film séparateur et la première électrode ensemble selon l'axe X, cela a pour conséquence de plier le film 3 séparateur autour des moyens de préhension.

L'invention concerne aussi une unité de fabrication comprenant :
- des moyens aptes à dérouler le film 3 séparateur,
- des moyens aptes à déposer des électrodes sur le film 3 séparateur,
- un premier élément 8 de maintien, un deuxième élément 10 de maintien, un troisième élément 11 de maintien et un quatrième élément 12 de maintien,
- une unité de commande comprenant un programme informatique apte à mettre en œuvre le procédé 25 précédemment décrit.

Cette unité de fabrication comprenant notamment une unité de commande munie d'un programme informatique pour la mise en œuvre du procédé 25 précédemment décrit permet avantageusement de réduire de façon significative les risque d'endommagement du film 3 séparateur améliorant ainsi la fiabilité des cellules ainsi fabriquées et la sécurité des utilisateurs.

Avantageusement, dans un mode de réalisation, l'unité de fabrication comprend un chariot mobile. Le premier élément 8 de maintien et le deuxième élément 10 de maintien de la première électrode sont montés sur le chariot mobile. Le premier élément 8 de maintien et le deuxième élément 9 de maintien se présentent sous la forme de moyens de préhension aptes à saisir le film 3 séparateur et une première électrode simultanément.

Le chariot peut alors se déplacer de façon à dérouler le film séparateur et déplacer la première électrode simultanément.

Ceci permet de réduire et ainsi optimiser le temps de production.

Avantageusement, dans un mode de réalisation, le troisième élément 11 de maintien et le quatrième élément 12 de maintien sont distincts des moyens aptes à dérouler le film séparateur et des moyens aptes à déposer la deuxième électrode. Le troisième élément 11 de maintien et le quatrième élément 12 de maintien se présentent sous la forme de plaques.

## Revendications

1. Procédé (25) de fabrication d'une cellule pour batterie secondaire comprenant :
- une première opération (O1) de déroulement d'un film (3) séparateur,
- une deuxième opération (O2) de dépose sur le film (3) séparateur d'une première électrode (1),
- une troisième opération (O3) de maintien sur le film (3) séparateur d'un premier bord (4) latéral et d'un premier bord (6) longitudinal de la première électrode (1) au moyen d'un premier élément (8) de maintien et d'un deuxième bord (5) latéral opposé au premier bord (4) latéral et du premier bord (6) longitudinal de la première électrode (1), au moyen d'un deuxième élément (10) de maintien,
- une quatrième opération (O4) de déroulement du film (3) séparateur pour recouvrir la première électrode (1),
- une cinquième opération (O5) de dépose sur le film (3) séparateur d'une deuxième électrode (2) de polarité opposée à la première électrode (1), la deuxième électrode (2) étant agencée sensiblement en regard de la première électrode (1),
- une sixième opération (O6) de maintien sur le film (3) séparateur d'un troisième bord (18) latéral et d'un troisième bord (20) longitudinal de la deuxième électrode (2) au moyen d'un troisième élément (11) de maintien et d'un quatrième bord (19) latéral et du troisième bord (20) longitudinal de la deuxième électrode (2), au moyen d'un quatrième élément (12) de maintien,
- une septième opération (O7) de déroulement du film (3) séparateur pour recouvrir la deuxième électrode (2),
- une huitième opération (O8) de retrait du premier élément (8) de maintien et du deuxième élément (10) de maintien,
- une neuvième opération (O9) de retrait du troisième élément (11) de maintien et du quatrième élément (12) de maintien, procédé dans lequel les opérations peuvent être répétées une pluralité de fois,
procédé dans lequel la huitième opération (O8) de retrait comprend successivement un premier mouvement (13) latéral dans lequel le premier élément (8) de maintien et le deuxième élément (10) de maintien effectuent un mouvement selon un premier axe (X)
parallèle aux premier et deuxième bords (4, 5) latéraux et un premier mouvement (14) d'éloignement dans lequel les premier et deuxième éléments (8, 10) de maintien s'éloignent de la première électrode (1)
ou,
ladite huitième opération (O8) de retrait comprend simultanément un premier mouvement (13) latéral dans lequel le premier élément (8) de maintien et le deuxième élément (10) de maintien effectuent un mouvement selon un premier axe (X) parallèle aux premier et deuxième bords (4, 5) latéraux et un premier mouvement (14) d'éloignement dans lequel les premier et deuxième éléments (8, 10) de maintien s'éloignent de la première électrode (1).

2. Procédé (25) selon la revendication 1 dans lequel, le premier mouvement (14) d'éloignement est réalisé selon un deuxième axe (Y) perpendiculaire au premier axe (X), ledit deuxième axe (Y) étant parallèle à des premier et deuxième bords (6, 7) longitudinaux de la première (1) électrode, lesdits bords (6, 7) longitudinaux étant sensiblement perpendiculaire aux premier et deuxième bords (4, 5) latéraux.

3. Procédé (25) selon l'une quelconque des revendications précédentes dans lequel, le premier élément (8) de maintien et le deuxième élément (10) de maintien viennent respectivement au contact de la première électrode (1) et du film (3) séparateur de sorte qu'une portion desdits premier et deuxième élément (8, 10) soit en contact avec la première électrode (1) et qu'une autre portion des premier et deuxième éléments (8, 10) de maintien soit au contact du film (3) séparateur situé en dessous de la première électrode (1), procédé (25) dans lequel le film (3) séparateur est replié autour des premier et deuxième éléments (8, 10) de maintien en définissant une première ligne (16) de pliage qui s'étend selon le deuxième axe (Y).

4. Procédé (25) selon la revendication 3 dans lequel, au cours du premier mouvement (13) latéral, le premier élément (8) de maintien et le deuxième élément (10) de maintien se déplacent selon le premier axe (X) depuis la première ligne (16) de pliage vers le deuxième bord (7) longitudinal.

5. Procédé (25) selon l'une quelconque des revendications précédente dans lequel la neuvième opération (O9) de retrait comprend successivement un deuxième mouvement (23) latéral dans lequel le troisième élément (11) de maintien et le quatrième élément (12) de maintien se déplacent selon le premier axe (X) et un deuxième mouvement (24) d'éloignement dans lequel le troisième et le quatrième élément (11, 12) de maintien s'éloignent de la deuxième électrode (2)
ou,
ladite neuvième opération (O9) de retrait comprend simultanément un deuxième mouvement (23) latéral dans lequel le troisième élément (11) de maintien et le quatrième élément (12) de maintien se déplacent selon le premier axe (X) et un deuxième mouvement (24) d'éloignement dans lequel le troisième et le quatrième élément (11, 12) de maintien s'éloignent de la deuxième électrode (2).

6. Procédé (25) selon la revendication 5 dans lequel, le deuxième (24) mouvement d'éloignement est réalisé selon un deuxième axe (Y) perpendiculaire au premier axe (X), ledit deuxième axe (Y) étant parallèle à des troisième et quatrième bords (20, 21) longitudinaux de la deuxième électrode (2), lesdits troisième et quatrième bords (20, 21) longitudinaux étant sensiblement perpendiculaires aux troisième et quatrième bords (18, 19) latéraux.

7. Procédé (25) selon l'une quelconque des revendications 5 ou 6 dans lequel, le troisième élément (11) de maintien et le quatrième élément (12) de maintien viennent respectivement au contact du troisième bord (18) latéral et quatrième bord (19) latéral de sorte qu'une portion des troisième et quatrième éléments (11, 12) de maintien soit en contact de la deuxième électrode (2) et qu'une autre portion des troisième et quatrième éléments (11, 12) de maintien soit au contact du film (3) séparateur situé en dessous de la deuxième électrode (2), procédé (25) dans lequel le film (3) séparateur est replié autour des troisième et quatrième éléments (11, 12) de maintien en définissant une deuxième ligne (17) de pliage qui s'étend selon le deuxième axe (Y).

8. Procédé (25) selon la revendication 7 dans lequel, au cours du deuxième mouvement (23) latéral, le troisième élément (11) de maintien et le quatrième élément (12) de maintien se déplacent selon le premier axe (X) depuis la deuxième ligne (17) de pliage vers le quatrième bord (21) longitudinal.

9. Procédé (25) selon l'une quelconque des revendications précédentes dans lequel, l'opération (O1) de déroulement et l'opération (O2) de dépose de la première électrode sont réalisées simultanément.

10. Procédé (25) selon la revendication 9 dans lequel, celui-ci comprend une opération (O0) initiale de déroulement du film (3) séparateur, antérieure à l'opération (O1) de déroulement et à l'opération (O2) de dépose de la première électrode.

11. Procédé (25) selon la revendication 10 dans lequel, l'opération (O0) initiale est effectuée une seule fois au cours de l'assemblage des électrodes pour former la cellule.

12. Unité de fabrication comprenant :
- des moyens aptes à dérouler un film (3) séparateur,
- des moyens aptes à déposer des électrodes (1, 2) sur le film (3) séparateur,
- un premier élément (8) de maintien, un deuxième élément (10) de maintien, un troisième élément (11) de maintien et un quatrième élément (12) de maintien,
- une unité de commande comprenant un programme informatique apte à mettre en œuvre un procédé (25) selon l'une quelconque des revendications 1 à 11.

13. Unité de fabrication selon la revendication 12 dans laquelle, celle-ci comprend un chariot mobile sur lequel est monté le premier élément (8) de maintien et le deuxième élément (10) de maintien de la première électrode, lesdits éléments (8, 9) de maintien étant des moyens de préhension aptes à saisir le film (3) séparateur et une première électrode (1) simultanément.

14. Unité de fabrication selon l'une quelconque des revendications 12 et 13 dans laquelle, le troisième élément (11) de maintien et le quatrième élément (12) de maintien sont distincts des moyens aptes à dérouler le film séparateur et des moyens aptes à déposer une deuxième électrode (2).

## Patentansprüche

1. Verfahren (25) zum Herstellen einer Zelle für eine Speicherbatterie, umfassend:
- einen ersten Vorgang (01) eines Abrollens einer Trennfolie (3),
- einen zweiten Vorgang (O2) eines Aufbringens einer ersten Elektrode (1) auf die Trennfolie (3),
- einen dritten Vorgang (O3) eines Haltens einer ersten Seitenkante (4) und einer ersten Längskante (6) der ersten Elektrode (1) mittels eines ersten Halteelements (8) und einer zweiten Seitenkante (5), die der ersten Seitenkante (4) entgegengesetzt ist, und der ersten Längskante (6) der ersten Elektrode (1) mittels eines zweiten Halteelements (10) auf der Trennfolie (3),
- einen vierten Vorgang (O4) des Abrollens der Trennfolie (3) zum Bedecken der ersten Elektrode (1),
- einen fünften Vorgang (O5) des Aufbringens einer zweiten Elektrode (2) mit entgegengesetzter Polarität zu der ersten Elektrode (1) auf die Trennfolie (3), wobei die zweite Elektrode (2) im Wesentlichen gegenüber der ersten Elektrode (1) angeordnet ist,
- einen sechsten Vorgang (O6) des Haltens einer dritten Seitenkante (18) und einer dritten Längskante (20) der zweiten Elektrode (2) mittels eines dritten Halteelements (11) und einer vierten Seitenkante (19) und der dritten Längskante (20) der zweiten Elektrode (2) mittels eines vierten Halteelements (12) auf der Trennfolie (3),
- einen siebten Vorgang (O7) des Abrollens der Trennfolie (3) zum Bedecken der zweiten Elektrode (2),
- einen achten Vorgang (O8) eines Entfernens des ersten Halteelements (8) und des zweiten Halteelements (10),
- einen neunten Vorgang (O9) des Entfernens des dritten Halteelements (11) und des vierten Halteelements (12), in welchem Verfahren die Vorgänge eine Vielzahl von Malen wiederholt werden können,
in welchem Verfahren der achte Vorgang (O8) des Entfernens nacheinander eine erste seitliche Bewegung (13), bei der das erste Halteelement (8) und das zweite Halteelement (10) eine Bewegung entlang einer ersten Achse (X) parallel zu der ersten und der zweiten seitlichen Kante (4, 5) ausführen, und eine erste Wegbewegung (14) umfasst, bei der sich das erste und das zweite Halteelement (8, 10) von der ersten Elektrode (1) wegbewegen, oder
der achte Vorgang (O8) des Entfernens gleichzeitig eine erste seitliche Bewegung (13), bei der das erste Halteelement (8) und das zweite Halteelement (10) eine Bewegung entlang einer ersten Achse (X) parallel zu der ersten und der zweiten seitlichen Kante (4, 5) ausführen, und eine erste Wegbewegung (14) umfasst, bei der sich das erste und das zweite Halteelement (8, 10) von der ersten Elektrode (1) wegbewegen.

2. Verfahren (25) nach Anspruch 1, wobei die erste Wegbewegung (14) entlang einer zweiten Achse (Y) senkrecht zu der ersten Achse (X) vorgenommen wird, wobei die zweite Achse (Y) parallel zu der ersten und der zweiten Längskante (6, 7) der ersten (1) Elektrode ist, wobei die Längskanten (6, 7) im Wesentlichen senkrecht zu der ersten und der zweiten Seitenkante (4, 5) sind.

3. Verfahren (25) nach einem der vorstehenden Ansprüche, wobei das erste Halteelement (8) und das zweite Halteelement (10) jeweils mit der ersten Elektrode (1) und der Trennfolie (3) in Kontakt kommen, sodass ein Abschnitt des ersten und des zweiten Halteelements (8, 10) mit der ersten Elektrode (1) in Kontakt steht und ein anderer Abschnitt des ersten und des zweiten Halteelements (8, 10) mit der Trennfolie (3) in Kontakt steht, die sich unter der ersten Elektrode (1) befindet, in welchem Verfahren (25) die Trennfolie (3) um das erste und das zweite Halteelement (8, 10) herum gefaltet wird, indem eine erste Faltlinie (16) definiert wird, die sich entlang der zweiten Achse (Y) erstreckt.

4. Verfahren (25) nach Anspruch 3, wobei sich während der ersten seitlichen Bewegung (13) das erste Halteelement (8) und das zweite Halteelement (10) entlang der ersten Achse (X) von der ersten Faltlinie (16) in Richtung der zweiten Längskante (7) verschieben.

5. Verfahren (25) nach einem der vorstehenden Ansprüche, wobei der neunte Vorgang (O9) des Entfernens nacheinander eine zweite seitliche Bewegung (23), bei der sich das dritte Halteelement (11) und das vierte Halteelement (12) entlang der ersten Achse (X) bewegen, und eine zweite Wegbewegung (24) umfasst, bei der sich das dritte und das vierte Halteelement (11, 12) von der zweiten Elektrode (2) wegbewegen,
oder
der neunte Vorgang (O9) des Entfernens gleichzeitig eine zweite seitliche Bewegung (23), bei der sich das dritte Halteelement (11) und das vierte Halteelement (12) entlang der ersten Achse (X) bewegen, und eine zweite Wegbewegung (24) umfasst, bei der sich das dritte und das vierte Halteelement (11, 12) von der zweiten Elektrode (2) wegbewegen.

6. Verfahren (25) nach Anspruch 5, wobei die zweite (24) Wegbewegung entlang einer zweiten Achse (Y) senkrecht zu der ersten Achse (X) vorgenommen wird, wobei die zweite Achse (Y) parallel zu der dritten und der vierten Längskante (20, 21) der zweiten Elektrode (2) ist und wobei die dritte und die vierte Längskante (20, 21) im Wesentlichen senkrecht zu der dritten und der vierten Seitenkante (18, 19) sind.

7. Verfahren (25) nach einem der Ansprüche 5 oder 6, wobei das dritte Halteelement (11) und das vierte Halteelement (12) jeweils mit der dritten Seitenkante (18) und der vierten Seitenkante (19) in Kontakt kommen, sodass ein Abschnitt des dritten und des vierten Halteelements (11, 12) mit der zweiten Elektrode (2) in Kontakt steht und ein anderer Abschnitt des dritten und des vierten Halteelements (11, 12) mit der Trennfolie (3) in Kontakt steht, die sich unter der zweiten Elektrode (2) befindet, in welchem Verfahren (25) die Trennfolie (3) um das dritte und das vierte Halteelement (11, 12) herum gefaltet wird, indem eine zweite Faltlinie (17) definiert wird, die sich entlang der zweiten Achse (Y) erstreckt.

8. Verfahren (25) nach Anspruch 7, wobei sich während der zweiten seitlichen Bewegung (23) das dritte Halteelement (11) und das vierte Halteelement (12) entlang der ersten Achse (X) von der zweiten Faltlinie (17) in Richtung der vierten Längskante (21) verschieben.

9. Verfahren (25) nach einem der vorstehenden Ansprüche, wobei der Vorgang (01) des Abrollens und der Vorgang (O2) des Aufbringens der ersten Elektrode gleichzeitig vorgenommen werden.

10. Verfahren (25) nach Anspruch 9, wobei dies einen anfänglichen Vorgang (O0) des Abrollens der Trennfolie (3) vor dem Vorgang (01) des Abrollens und dem Vorgang (O2) des Aufbringens der ersten Elektrode umfasst.

11. Verfahren (25) nach Anspruch 10, wobei der anfängliche Vorgang (O0) nur einmal während des Zusammenbaus der Elektroden zum Ausbilden der Zelle ausgeführt wird.

12. Herstellungseinheit, umfassend:
- Mittel, die geeignet sind, um eine Trennfolie (3) abzurollen,
- Mittel, die geeignet sind, um Elektroden (1, 2) auf die Trennfolie (3) aufzubringen,
- ein erstes Halteelement (8), ein zweites Halteelement (10), ein drittes Halteelement (11) und ein viertes Halteelement (12),
- eine Steuereinheit, umfassend ein Computerprogramm, das geeignet ist, um ein Verfahren (25) nach einem der Ansprüche 1 bis 11 zu implementieren.

13. Herstellungseinheit nach Anspruch 12, wobei diese einen bewegbaren Wagen umfasst, auf dem das erste Halteelement (8) und das zweite Halteelement (10) der ersten Elektrode montiert sind, wobei die Halteelemente (8, 9) Greifmittel sind, die geeignet sind, um die Trennfolie (3) und eine erste Elektrode (1) gleichzeitig zu packen.

14. Herstellungseinheit nach einem der Ansprüche 12 und 13, wobei das dritte Halteelement (11) und das vierte Halteelement (12) von den Mitteln, die geeignet sind, um die Trennfolie abzurollen, und von den Mitteln, die geeignet sind, um eine zweite Elektrode (2) aufzubringen, verschieden sind.

## Claims

1. Method (25) for manufacturing a cell for a secondary battery, the method comprising:
- a first operation (01) of unwinding a separator film (3),
- a second operation (O2) of depositing a first electrode (1) on the separator film (3),
- a third operation (O3) of holding, on the separator film (3), a first lateral edge (4) and a first longitudinal edge (6) of the first electrode (1) by means of a first holding element (8), and a second lateral edge (5) opposite the first lateral edge (4) and the first longitudinal edge (6) of the first electrode (1) by means of a second holding element (10),
- a fourth operation (O4) of unwinding the separator film (3) in order to cover the first electrode (1),
- a fifth operation (O5) of depositing on the separator film (3) a second electrode (2) of opposite polarity to the first electrode (1), the second electrode (2) being arranged substantially opposite the first electrode (1),
- a sixth operation (O6) of holding, on the separator film (3), a third lateral edge (18) and a third longitudinal edge (20) of the second electrode (2) by means of a third holding element (11), and a fourth lateral edge (19) and the third longitudinal edge (20) of the second electrode (2) by means of a fourth holding element (12),
- a seventh operation (O7) of unwinding the separator film (3) in order to cover the second electrode (2),
- an eighth operation (O8) of removing the first holding element (8) and the second holding element (10),
- a ninth operation (O9) of removing the third holding element (11) and the fourth holding element (12),
in which method the operations can be repeated a plurality of times,
in which method the eighth operation (O8) of removal successively comprises a first lateral movement (13) in which the first holding element (8) and the second holding element (10) move along a first axis (X) parallel to the first and second lateral edges (4, 5) and a first movement (14) away in which the first and second holding elements (8, 10) move away from the first electrode (1) or,
said eighth operation (O8) of removal simultaneously comprises a first lateral movement (13) in which the first holding element (8) and the second holding element (10) move along a first axis (X) parallel to the first and second lateral edges (4, 5) and a first movement (14) away in which the first and second holding elements (8, 10) move away from the first electrode (1).

2. Method (25) according to claim 1, wherein the first movement (14) away is carried out along a second axis (Y) perpendicular to the first axis (X), said second axis (Y) being parallel to first and second longitudinal edges (6, 7) of the first electrode (1), said longitudinal edges (6, 7) being substantially perpendicular to the first and second lateral edges (4, 5).

3. Method (25) according to either of the preceding claims, wherein the first holding element (8) and the second holding element (10) come into contact with the first electrode (1) and the separator film (3) respectively so that a portion of said first and second elements (8, 10) is in contact with the first electrode (1) and that another portion of the first and second holding elements (8, 10) is in contact with the separator film (3) located below the first electrode (1), in which method (25) the separator film (3) is folded around the first and second holding elements (8, 10), defining a first fold line (16) which extends along the second axis (Y).

4. Method (25) according to claim 3, wherein, during the first lateral movement (13), the first holding element (8) and the second holding element (10) move along the first axis (X) from the first fold line (16) towards the second longitudinal edge (7).

5. Method (25) according to any of the preceding claims, wherein the ninth operation (O9) of removal successively comprises a second lateral movement (23) in which the third holding element (11) and the fourth holding element (12) move along the first axis (X) and a second movement (24) away in which the third and fourth holding elements (11, 12) move away from the second electrode (2)
or,
said ninth operation (O9) of removal simultaneously comprises a second lateral movement (23) in which the third holding element (11) and the fourth holding element (12) move along the first axis (X) and a second movement (24) away in which the third and fourth holding elements (11, 12) move away from the second electrode (2).

6. Method (25) according to claim 5, wherein the second (24) movement away is carried out along a second axis (Y) perpendicular to the first axis (X), said second axis (Y) being parallel to the third and fourth longitudinal edges (20, 21) of the second electrode (2), said third and fourth longitudinal edges (20, 21) being substantially perpendicular to the third and fourth lateral edges (18, 19).

7. Method (25) according to either of claims 5 or 6, wherein the third holding element (11) and the fourth holding element (12) come into contact with the third lateral edge (18) and fourth lateral edge (19) respectively so that a portion of the third and fourth holding elements (11, 12) is in contact with the second electrode (2) and that another portion of the third and fourth holding elements (11, 12) is in contact with the separator film (3) located below the second electrode (2), in which method (25) the separator film (3) is folded around the third and fourth holding elements (11, 12), defining a second fold line (17) which extends along the second axis (Y).

8. Method (25) according to claim 7, wherein, during the second lateral movement (23), the third holding element (11) and the fourth holding element (12) move along the first axis (X) from the second fold line (17) towards the fourth longitudinal edge (21).

9. Method (25) according to any of the preceding claims, wherein the unwinding operation (01) and the operation (O2) of depositing the first electrode are carried out simultaneously.

10. Method (25) according to claim 9, wherein the method comprises an initial operation (O0) of unwinding the separator film (3), prior to the unwinding operation (01) and the operation (O2) of depositing the first electrode.

11. Method (25) according to claim 10, wherein the initial operation (O0) is carried out only once during the assembly of the electrodes to form the cell.

12. Manufacturing unit comprising:
- means for unwinding a separator film (3),
- means for depositing electrodes (1, 2) on the separator film (3),
- a first holding element (8), a second holding element (10), a third holding element (11) and a fourth holding element (12),
- a control unit comprising a computer program capable of executing a method (25) according to any of claims 1 to 11.

13. Manufacturing unit according to claim 12, wherein the unit comprises a movable carriage on which the first holding element (8) and the second holding element (10) for the first electrode are mounted, said holding elements (8, 9) being gripping means for simultaneously gripping the separator film (3) and a first electrode (1).

14. Manufacturing unit according to either of claims 12 and 13, wherein the third holding element (11) and the fourth holding element (12) are distinct from the means for unwinding the separator film and from the means for depositing a second electrode (2).
